# EUROPÄISCHE PATENTSCHRIFT

(11) **EP 1 708 903 B1**
(45) Veröffentlichungstag und Bekanntmachung des Hinweises auf die Patenterteilung: **20.02.2008**
(21) Anmeldenummer: 05700546.4
(22) Anmeldetag: 15.01.2005
(51) Int. Cl.: B60J 7/12, B60J 7/20

(54) **CABRIOLET-FAHRZEUG**
CABRIOLET
CABRIOLET

(30) Priorität: 20.01.2004 DE 102004003022
(43) Veröffentlichungstag der Anmeldung: 11.10.2006
(73) Patentinhaber: Wilhelm Karmann GmbH, 49084 Osnabrück (DE)
(72) Erfinder: KREILING, Nils, 49078 Osnabrück (DE); HOLLENBECK, Sven, 49492 Westerkappeln (DE)
(86) Internationale Anmeldenummer: PCT/DE2005/000055
(87) Internationale Veröffentlichungsnummer: WO 2005/068239

(56) Entgegenhaltungen:
- WO-A-02/43978
- DE-A1- 4 336 278
- DE-A1- 10 144 583

## Beschreibung

Die Erfindung betrifft ein Cabriolet-Fahrzeug mit einem zumindest bereichsweise mit einem flexiblen Bezug versehenen Dach nach dem Oberbegriff des Anspruchs 1. Ein solches Fahrzeug ist aus der WO 02/43978A bekannt.

Es ist bekannt, daß bei einem Cabriolet-Fahrzeug der genannten Art der vordere Dachbereich bei geöffnetem Dach nach Art eines Deckels über weiteren Bereichen des Daches liegt und von oben offen sichtbar bleibt. Das Dach liegt dann in einer Karosserieausnehmung, die in die Karosserieaußenfläche eingelassen ist. Diese umgibt die Ausnehmung zumindest seitlich und hinten. Vorne schließt sich mittelbar oder häufig unmittelbar ein Insassenraum an.

Dabei ist einerseits für einen harmonischen Übergang der die Ausnehmung begrenzenden Kanten möglichst die hintere Begrenzung der Ausnehmung, die eine Vorderkante der weiter nach hinten anschließenden Karosserieaußenfläche darstellt, in einer Kurvenform ausgebildet, die zu den Fahrzeugseiten hin nach vorne weist.

Andererseits soll ein Dach der genannten Art bei seiner Öffnung hinter dem starr untergriffenen vorderen Dachbereich derart einfalten, daß die dort liegende Faltkante möglichst über die Dachbreite in Draufsicht zumindest nahezu geradlinig im 90°-Winkel zur Fahrtrichtung verläuft, um einen sauberen Bezugverlauf bei geschlossenem Dach ohne Falten sicherzustellen.

Somit ergibt sich an der Kante der Begrenzung der Ausnehmung zumindest in den seitlichen Eckbereichen ein Konflikt zwischen der im wesentlichen geradlinigen hinteren Kante des dann oben liegenden vorderen Dachteils und der an den Querseiten nach vorne eingezogenen Begrenzungskante der Ausnehmung. Wenn daher die Ecken des vorderen Dachteils bei der Dachbewegung an der Kante kollisionsfrei vorbeigeführt werden sollen, ist ein erheblicher Abstand zwischen den Teilen erforderlich. Dadurch verbleibt zumindest im Bereich der vertikalen Fahrzeuglängsmittelebene ein in Fahrzeuglängsrichtung lang erstreckter Spalt zwischen der Kante der Ausnehmung und der hinten gelegenen Faltkante des vorderen Dachteils. Derartige Spalte sind jedoch optisch unerwünscht und ermöglichen ohne weitere Maßnahmen auch einen unbefugten Zugriff in den darunter liegenden Kofferraum.

Ein Versuch, diesen Konflikt zu entschärfen, besteht darin, für den hinteren Endbereich der Ausnehmung einen schmalen, in Draufsicht annähernd sichelförmigen Schwenkdeckel vorzusehen, dessen hintere Kante im wesentlichen quer zum Fahrzeug liegt und dessen vordere Kante in der gewünschten Kurvatur mit nach vorne erstreckten Seitenbereichen liegt. Ein solcher bewegter Dekkel erfordert jedoch zusätzlichen Antriebs- und Steuerungsaufwand und stört mit seinen zusätzlichen Seitenfugen das Erscheinungsbilde der Karosserieaußenfläche.

Der Erfindung liegt das Problem zugrunde, die Ablage eines Daches mit in Ablagestellung in gleicher Orientierung wie in geschlossener Stellung liegendem vorderem Dachteil zu optimieren.

Die Erfindung löst dieses Problem durch ein Cabriolet-Fahrzeug mit den Merkmalen des Anspruchs 1. Hinsichtlich weiterer vorteilhafter Ausgestaltungen der Erfindung wird auf die Ansprüche 2 bis 13 verwiesen.

Durch die Erfindung stellt die in Ablagestellung des Daches hintere Kante des vorderen Dachbereichs keine Faltkante für den Bezug dar und kann somit erheblich vom geradlinigen Verlauf abweichen. Damit ist diese Kante an einen beliebigen Verlauf der die Karosserieausnehmung nach hinten begrenzenden Kante anpaßbar und sichert somit eine optisch sehr vorteilhafte parallele Lage von hinterer Kante des vorderen Dachteils und der die Ausnehmung für das Dach begrenzenden Kante. Beide Kanten können bei abgelegtem Dach sehr dicht voreinander liegen. Sowohl optisch als auch als Sicherung gegen ein Eingreifen ist damit eine Verbesserung erreicht.

Sofern die Trennungsfuge während der Dachablage öffnet und der hinter der rückwärtigen Kante des vorderen Dachbereichs anschließende weitere Dachbereich dabei unter den vorderen Dachbereich verlagerbar ist, kann der vordere Dachbereich nach Art eines Deckels nahezu die gesamte Karosserieausnehmung überdecken, ohne daß die weiteren, mit Bezug versehenen Dachbereiche bei abgelegtem Dach sichtbar wären. Insbesondere ist eine Faltungskante des Bezugs damit beim Öffnen unter und vor den vorderen Dachbereich, so daß die in ihrem Verlauf durch den Bezug vorgegebene Faltungskante nicht mehr in den Nahbereich der die Ausnehmung begrenzenden Karosseriekante gelangt.

Insbesondere kann für einen optisch harmonischen Verlauf der vordere Dachbereich im abgelegten Zustand des Daches in etwa auf einer Höhe mit der weiter hinten anschließenden begrenzenden Kante und der weiteren Karosserieaußenfläche liegen. Er braucht nicht wie im Stand der Technik unterhalb eines etwaigen Schwenkdeckels zu liegen.

Weiterhin ist es optisch besonders vorteilhaft, wenn der verbleibende Spalt zwischen der hinteren Kante des vorderen Dachbereichs und der die Ausnehmung begrenzenden Karosseriekante kleiner als ca. 40 Millimeter, insbesondere kleiner als 30 oder gar 20 Millimeter, ist. Dies wird durch die Abtrennung des vorderen Dachbereichs ermöglicht, der damit an seinem hinteren Ende nicht mit einem Bezug verbunden ist. Die Eingriffsgefahr in den Spalt ist durch das enge Spaltmaß weiter verringert.

Wenn die die Karosserieausnehmung begrenzende Kante der Karosserie über ihren Verlauf in Draufsicht derart verläuft, daß sie zu den Fahrzeugquerseiten hin jeweils eine in Fahrtrichtung weisende Komponente umfaßt und die rückwärtige Kante des vorderen Dachbereichs ebenfalls zu den Seiten hin entsprechend der Krümmung der Karosseriekante in Fahrtrichtung weisende Komponenten umfaßt, ergibt sich eine Parallellage der beiden genannten Kanten, die über nahezu die gesamte Breite der Karosserieausnehmung reichen kann.

Wenn der vordere Dachbereich insgesamt als in sich starre Baueinheit ausgebildet ist, sind die Fertigungstoleranzen minimiert; insbesondere kann dabei der vordere Dachbereich einen einenends am Windschutzscheibenrahmen festlegbaren und anderenends mit dem weiteren, den Bezug umfassenden Dachbereich verbindbaren Plattenkörper umfassen, so daß er optisch einheitlich ist und insbesondere bei geöffnetem Dach eine gute Schutzfunktion ausübt. Der Plattenkörper kann für eine einfache Herstellung insbesondere einstückig sein und zur Gewichtsreduzierung aus einem Leichtbaumaterial, etwa Aluminium-Schaum, Magnesium-Druckguß oder Kunststoff, ausgebildet sein.

Die Anpassung des Plattenkörpers an die Ausnehmung zur Aufnahme des abgelegten Daches ist dabei optimiert, wenn er eine in Draufsicht im wesentlichen konvexe Form mit bombierter vorderer und hinterer Kante aufweist.

Trotz der Trennungsfuge können die Bereiche des Daches zuverlässig und stabil aneinander halten, sofern das vordere Ende des an den vorderen Dachbereich anschließenden weiteren Dachbereichs nach Art einer herkömmlichen Dachspitze - jedoch mit in Draufsicht zu dieser gegenläufiger Krümmung - ausgebildet und mit der rückwärtigen Kante des vorderen Dachbereichs verriegelbar ist.

Durch die Erfindung kann die an die Karosserieausnehmung anschließende Kante der Karosserie zumindest bereichsweise die Vorderkante einer Kofferraumklappe oder eines aussteifenden Querriegels der Karosserie sein, dem die Kofferraumklappe nachgeordnet ist. Ein Schwenkdeckel ist entbehrlich.

Weitere Vorteile und Merkmale der Erfindung ergeben sich aus einem in der Zeichnung zumindest schematisch dargestellten und nachfolgend beschriebenen Ausführungsbeispiel des Gegenstandes der Erfindung.

In der Zeichnung zeigt:
- Fig. 1: ein erfindungsgemäßes Kraftfahrzeug in schematischer, an der vertikalen Längsmittelebene abgebrochener Ansicht von oben bei geöffnetem Dach,
- Fig. 2: eine ähnliche Ansicht wie Fig. 1, jedoch bei geschlossenem Dach,
- Fig. 3: ein Fahrzeug gemäß dem Stand der Technik in ähnlicher Ansicht wie Fig. 1,
- Fig. 4: einen schematisierten und im unteren Bereich abgebrochenen Seitenschnitt im Bereich der vertikalen Längsmittelebene des erfindungsgemäßen Fahrzeugs bei geschlossenem und verriegeltem Dach,
- Fig. 5: eine ähnliche Ansicht wie Fig. 4 bei beginnender Dachöffnung,
- Fig. 6: eine ähnliche Ansicht wie Fig. 5 bei weiter fortschreitender Dachöffnung,
- Fig. 7: eine ähnliche Ansicht wie Fig. 6 bei weiter fortschreitender Dachöffnung kurz vor der vollständig geöffneten Stellung,
- Fig. 8: eine ähnliche Ansicht wie Fig. 7 bei vollständig geöffnetem Dach.

In den Zeichnungsfiguren ist ein zweisitziges Fahrzeug 1 dargestellt. Die Erfindung ist auch auf ein beispielsweise mit einer Rückbank versehenes vier- oder mehrsitziges Cabriolet-Fahrzeug anwendbar.

Das Fahrzeug 1 umfaßt in seinem oberen Bereich und an einen Windschutzscheibenrahmen 2 mittelbar oder unmittelbar angrenzend ein gegenüber der Karosserie 4 bewegliches Dach 3, dessen Außenhaut an einer über die gesamte Breite des Daches 3 erstreckte und bei der Dachöffnung öffnende Fuge 7 in einen bezüglich der Fahrtrichtung F hinteren Dachbereich 8 und einen vorderen Dachbereich 9 geteilt ist. Der hintere Dachbereich 8 umfaßt außerhalb einer Heckscheibe 5 einen flexiblen Dachbezug 6.

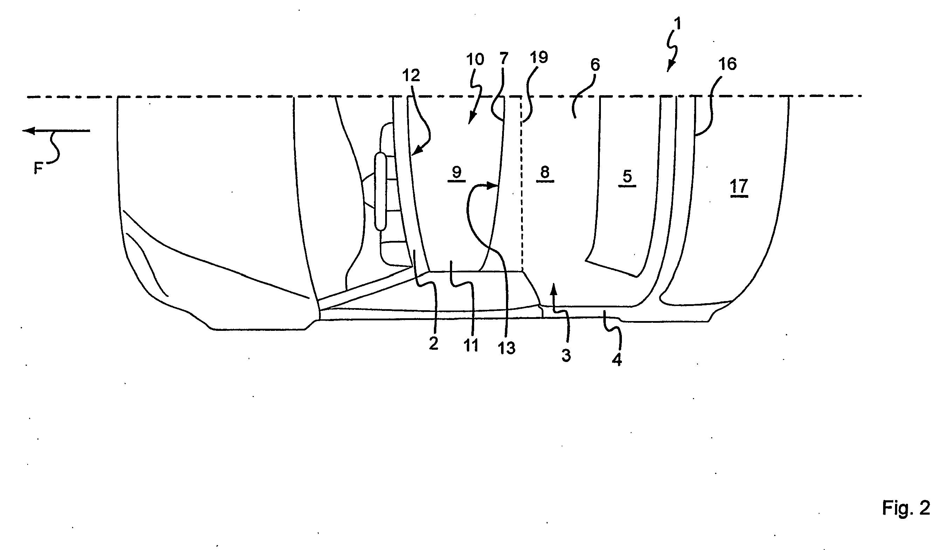

Der vordere Dachbereich 9 kann unterschiedliche ausgebildet sein und ebenfalls einen beispielsweise über einen Rahmen gespannten Bezug umfassen oder, wie im Ausführungsbeispiel, als Außenfläche 10 einen insgesamt starren Plattenkörper 11 umfassen und somit eine außerhalb bewegender Gestängeteile starre Baueinheit ausbilden. Der Plattenkörper 11 ist dabei mit seinem vorderen Ende 12 am Windschutzscheibenrahmen 2 und an seiner rückwärtigen Kante 13 in geschlossener Dachstellung (Fig. 2) mit dem weiteren Dachbereich 8 abgedichtet verbunden.

Die Kanten 12 und 13 sind jeweils bombiert, so daß sich in Draufsicht eine konvexe Form des vorderen Dachbereichs 9 ergibt.

Der Plattenkörper kann für eine einfache Herstellung einstückig und zur Gewichtsreduzierung aus einem Leichtbaumaterial, etwa Kunststoff oder Leichtmetallschaum, gebildet sein. Er kann beispielsweise transparent oder mit an den Bezug 6 angepaßter Färbung gestaltet sein.

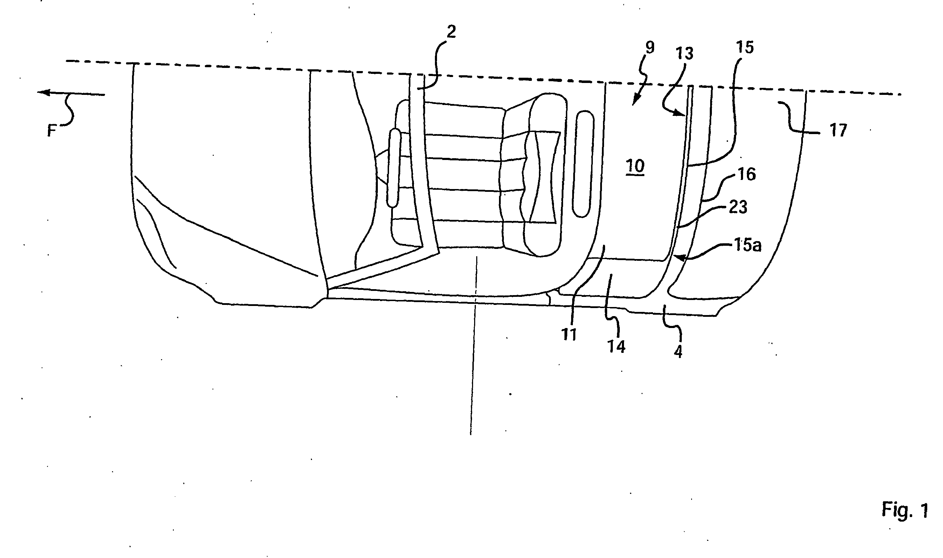

Der vordere Dachbereich 9 ist bei Öffnung des Daches (Übergang von Fig. 2 zu Fig. 1) in gleicher Orientierung wie im geschlossenen Zustand in einer Karosserieausnehmung 14 ablegbar, d. h., daß die bei geschlossenem Dach 3 nach oben und außen zeigende Fläche 10 des vorderen Dachbereichs 9 auch in geöffnetem Zustand des Daches 3 nach oben weist.

Die zur Aufnahme des geöffneten Daches 3 dienende Karosserieausnehmung 14 ist rückseitig und teilweise zu den Seiten von einer Kante 15 der Karosserie begrenzt. Diese Kante 15 ist insgesamt in einer derartigen Kurvatur angelegt, daß ihre seitlichen Abschnitte 15a eine in Fahrtrichtung F weisende Komponente umfassen. Sie liegt damit zumindest im mittleren Fahrzeugbereich parallel zu einer vorderen Abschlußkante 16 einer Kofferraumklappe 17 bzw. kann durch diese selbst gebildet sein.

Der an die Fuge 7 anschließende Dachbereich 8 ist im hier gezeichneten Ausführungsbeispiel außerhalb der Heckscheibe 5 durchgehend von dem Bezug 6 übergriffen, was nicht zwingend ist. Im vorderen Endbereich ist der Bezug 6 von einem starren Querträger 18 untergriffen, der nach Art einer Dachspitze mit Verriegelungsorganen versehen ist. Da diese "Dachspitze" jedoch nicht am Windschutzscheibenrahmen 2, sondern an der hinteren Kante 13 des vorderen Dachbereichs 9 zu verriegeln ist, ist die Krümmung des Querträgers gegensinnig zu einer üblichen Dachspitze ausgeführt, die in Fahrzeugmitte ihren am weitesten nach vorne ragenden Bereich aufweisen würde.

Im Bereich der hinteren Kante 19 des Querträgers 18 liegt eine Faltkante 19 für das Dach 3, die in Fig. 2 gestrichelt eingezeichnet ist. Diese Faltkante 19 ist von dem Bezug 6 durchgehend übergriffen.

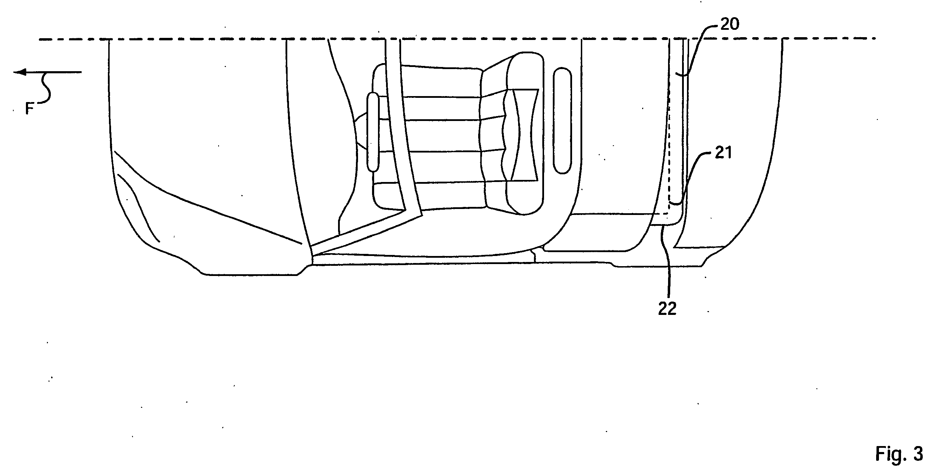

In herkömmlicher Ausbildung wäre an dieser im wesentlichen im 90°-Winkel zur Fahrzeuglängsrichtung liegenden Faltkante 19 die Trennung von vorderem und hinterem Dachteil, d.h., daß sich der Bereich vom Windschutzscheibenrahmen bis zu dieser Faltkante 19 als oberste Lage des Daches in die Karosserieausnehmung 14 legen würde (Fig. 3), wodurch eine erhebliche Erstreckung dieser Ausnehmung in Fahrzeuglängsrichtung erforderlich ist. Daher müßte die hintere Begrenzungskante 15 sehr weit nach hinten verlegt sein, oder es müßte, wie in Fig. 3 gezeichnet ist, ein zusätzlicher Schwenkdeckel 20 vorgesehen sein, der zum Durchtritt des Daches 3 öffnen kann und damit eine Kollision der gestrichelt eingezeichneten Eckbereiche 21 mit der Karosserie 4 vermeidet. Dies erfordert jedoch den geschilderten zusätzlichen Steuerungsaufwand und bedingt optisch nicht vorteilhafte weitere Fugen 22.

Daher reicht erfindungsgemäß die die obere Lage des abgelegten Daches bildende Fläche 10 nur bis zu der Teilungsfuge 7, wodurch das vordere Dachteil 9 verkürzt ist und somit in abgelegter Stellung weniger Platz in Fahrzeuglängsrichtung benötigt.

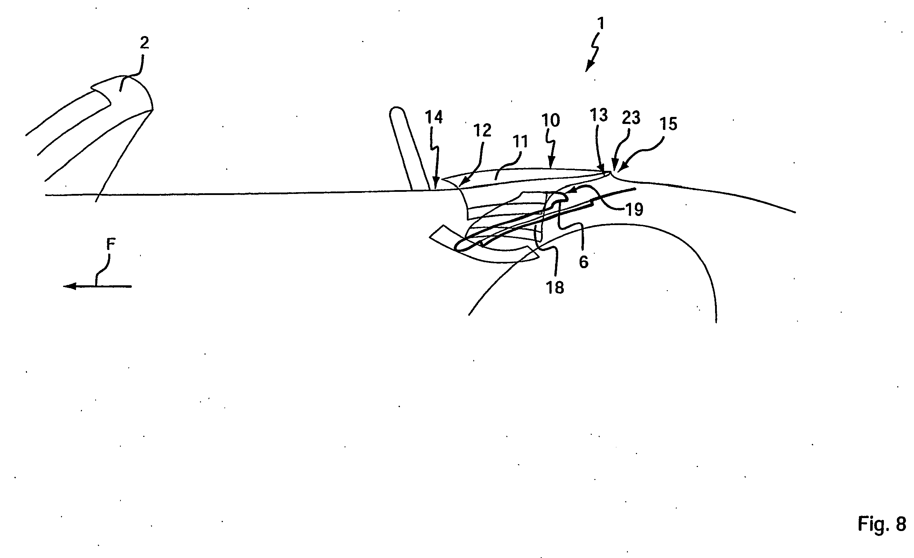

In abgelegter Dachstellung (Fig. 8) ist nicht mehr die Faltkante 19 die hintere Kante der oberen Dachfläche 10, sondern die viel weiter vorne liegende hintere Kante 13 des Plattenkörpers 11. Damit kann die Ausnehmung 14 kürzer und ohne einen Schwenkdeckel ausgeführt werden. Zudem kann die Abschlußkante 13 im Gegensatz zur Faltkante 19 über die Dachbreite beliebig geformt sein und somit genau an die Krümmung der die Ausnehmung 14 begrenzenden Kante 15 angepaßt sein und ebenfalls zu den Seiten hin in Fahrtrichtung F wiesende Komponenten umfassen. Es ergeben sich dann keine mehr in Kollisionsgefahr mit der Kante 15 stehenden Ecken 21. Im geöffneten Zustand können dann die Kanten 13 und 15 sowie die daran nach hinten anschließende Karosserieaußenfläche 24 parallel in einer Ebene und mit minimiertem Abstand zueinander liegen (Fig. 1). Der verbleibende Spalt 23 kann über die Dachbreite gleichmäßig schmaler als 40 Millimeter, insbesondere schmaler als 30 oder gar 20 Millimeter sein.

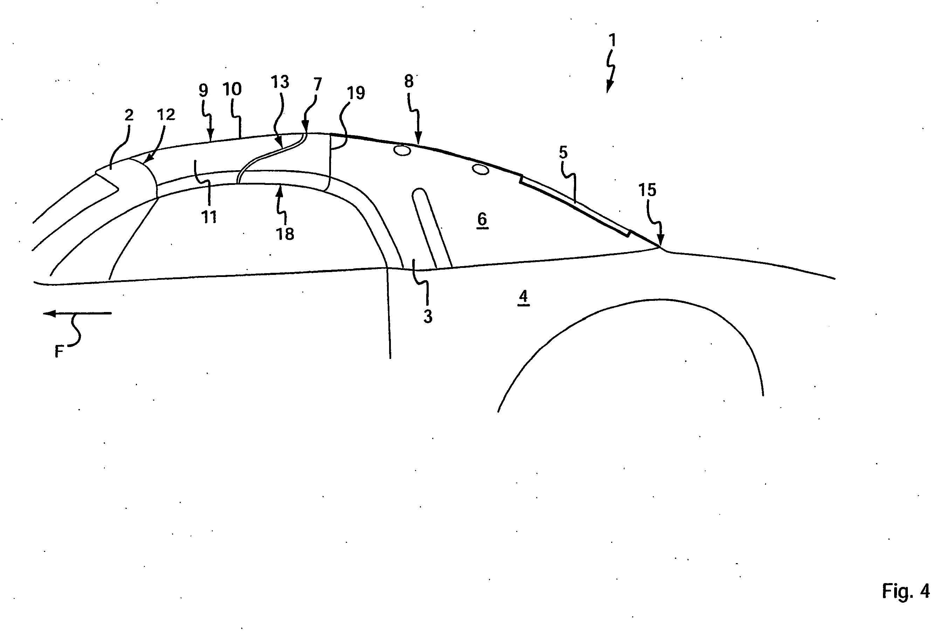

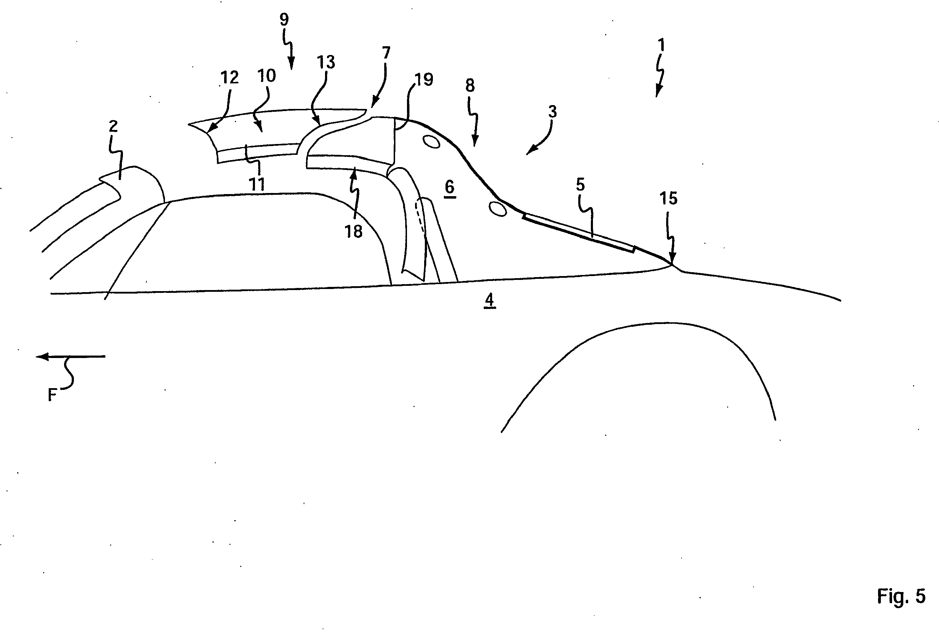

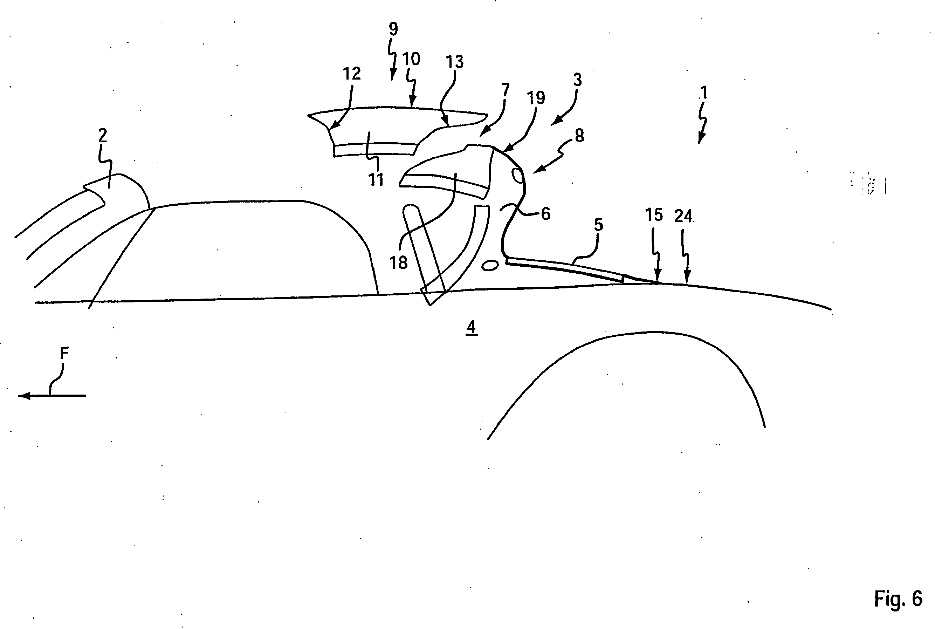

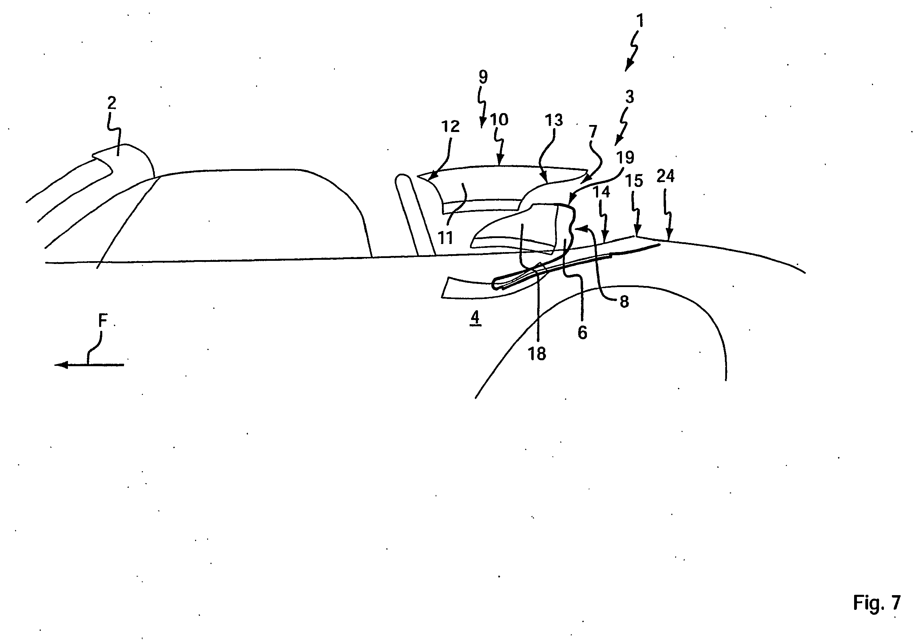

Während der Öffnungsbewegung des Daches 3 (Fig. 4 bis Fig. 8) wird die Trennungsfuge 7 geöffnet und dabei der hintere Dachbereich 8 unter den vorderen Dachbereich 9 verlagert, so daß auch die Faltungskante 19 von diesem übergriffen wird und gegenüber der bei geschlossenem Dach weiter vorne liegenden hinteren Kante 13 des vorderen Dachbereichs 9 nach vorne und unten wandert. Dadurch gelangt die Kante 13 als obere hintere Kante des Daches 3 in Ablagestellung in die dicht unterhalb oder auch in einer Ebene vor der Karosseriekante 15 liegende Stellung. Durch die mit der Teilungsfuge 7 erreichte Verkürzung des vorderen Dachbereichs 9 kann die Ausnehmung 14 daher minimale Ausmaße haben. Mit der dichten Anlage der Kante 13 an die Karosseriekante 15 ist auch ein verbleibender Spalt 23 zwischen vorderem Dachteil 9 und der Kante 15 minimiert.

Die Erfindung ist sowohl für manuell als auch für halb- oder vollautomatisch zu bewegende Dächer 3 verwendbar.

## Patentansprüche

1. Cabriolet-Fahrzeug (1) mit einem zumindest bereichsweise mit einem flexiblen Bezug (6) versehenen Dach (3), das einen vorderen Dachbereich (9) umfaßt, der in gleicher Orientierung wie im geschlossenen Zustand in einer Karosserieausnehmung (14) ablegbar ist, die rückwärtig von einer Kante (15) der Karosserie (4) begrenzt ist,
**dadurch gekennzeichnet,**
**daß** die Außenfläche (10) des vorderen Dachbereichs (9) gegenüber weiter hinten liegenden und mit Bezug (6) versehenen Bereichen (8) getrennt ist und die rückwärtige Kante (13) des vorderen Dachbereichs (9) an den Verlauf der die Karosserieausnehmung (14) rückwärtig begrenzenden Kante (15) der Karosserie (4) angepaßt ist.

2. Cabriolet-Fahrzeug (1) nach Anspruch 1,
**dadurch gekennzeichnet,**
**daß** eine Trennungsfuge (7) zwischen dem vorderen (9) und dem rückwärtig anschließenden Dachbereich (8) während der Dachablage öffnet und der hinter der rückwärtigen Kante (13) des vorderen Dachbereichs (9) anschließende weitere Dachbereich (8) dabei unter den vorderen Dachbereich (9) verlagerbar ist.

3. Cabriolet-Fahrzeug (1) nach einem der Ansprüche 1 oder 2,
**dadurch gekennzeichnet,**
**daß** der vordere Dachbereich (9) im abgelegten Zustand des Daches (3) zumindest nahezu in einer Höhe mit der weiter hinten anschließenden rückwärtig begrenzenden Kante (15) der Karosserie und einer daran heckwärts anschließenden weiteren Karosserieaußenfläche (14) liegt.

4. Cabriolet-Fahrzeug (1) nach einem der Ansprüche 1 bis 3,
**dadurch gekennzeichnet,**
**daß** der im abgelegten Zustand des Daches verbleibende Spalt (23) zwischen der rückwärtigen Kante (13) des vorderen Dachbereichs (9) und der die Ausnehmung rückwärtig begrenzenden Karosseriekante (15) schmaler als 40 Millimeter ist.

5. Cabriolet-Fahrzeug (1) nach einem der Ansprüche 1 bis 4,
**dadurch gekennzeichnet,**
**daß** die die Karosserieausnehmung (14) rückwärtig begrenzende Kante (15) der Karosserie (4) über ihren Verlauf in Draufsicht derart verläuft,
**daß** sie zu den Fahrzeugquerseiten hin jeweils eine in Fahrtrichtung (F) weisende Komponente umfaßt und die rückwärtige Kante (13) des vorderen Dachbereichs (9) zu den Seiten hin entsprechend der Krümmung der Karosseriekante (15) in Fahrtrichtung (F) weisende Komponenten umfaßt.

6. Cabriolet-Fahrzeug (1), nach einem der Ansprüche 1 bis 5,
**dadurch gekennzeichnet,**
**daß** der vordere Dachbereich (9) im wesentlichen als in sich starre Baueinheit ausgebildet ist.

7. Cabriolet-Fahrzeug (1) nach einem der Ansprüche 1 bis 6,
**dadurch gekennzeichnet,**
**daß** der vordere Dachbereich (9) einen einenends am Windschutzscheibenrahmen (2) festlegbaren und anderenends mit dem weiteren, den Bezug umfassenden Dachbereich (8) verbindbaren Plattenkörper (11) umfaßt.

8. Cabriolet-Fahrzeug (1) nach Anspruch 7,
**dadurch gekennzeichnet,**
**daß** der Plattenkörper (11) eine in Draufsicht im wesentlichen konvexe Form mit bombierter vorderer (12) und hinterer Kante (13) umfaßt.

9. Cabriolet-Fahrzeug (1) nach einem der Ansprüche 7 oder 8,
**dadurch gekennzeichnet,**
**daß** der Plattenkörper (11) einstückig ist.

10. Cabriolet-Fahrzeug (1) nach einem der Ansprüche 7 bis 9,
**dadurch gekennzeichnet,**
**daß** der Plattenkörper (11) aus einem Leichtbauwerkstoff besteht.

11. Cabriolet-Fahrzeug (1) nach einem der Ansprüche 1 bis 10,
**dadurch gekennzeichnet,**
**daß** das vordere Ende (18) des an den vorderen Dachbereich (9) anschließenden weiteren Dachbereichs (8) nach Art einer herkömmlichen Dachspitze ausgebildet und mit der rückwärtigen Kante (13) des vorderen Dachbereichs (9) verriegelbar ist.

12. Cabriolet-Fahrzeug (1) nach einem der Ansprüche 1 bis 11,
**dadurch gekennzeichnet,**
**daß** die an die Karosserieausnehmung (14) anschließende rückwärtig begrenzende Kante (15) der Karosserie zumindest bereichsweise die Vorderkante (16) einer Kofferraumklappe (17) ist.

13. Cabriolet-Fahrzeug (1) nach einem der Ansprüche 1 bis 11,
**dadurch gekennzeichnet,**
**daß** die an die Karosserieausnehmung (14) anschließende rückwärtig begrenzende (15) der Karosserie zumindest bereichsweise die Vorderkante eines einer Kofferraumklappe vorgeordneten Querriegels der Karosserieaußenfläche (24) ist.

## Claims

1. A cabriolet vehicle (1) with a roof (3) which is provided, at least in areas, with a flexible cover (6), which roof (3) includes a front roof area (9) which can be stored at the same orientation as in the closed state in a car body recess (14) which is bordered rearwardly by an edge (15) of the car body (4),
**characterised in that**
the outer surface (10) of the front roof area (9) is separate in relation to areas (8) situated further to the rear and provided with the cover (6), and the rear edge (13) of the front roof area (9) is adapted to the course of the car body (4) edge (15) which rearwardly borders the car body recess (14).

2. The cabriolet vehicle (1) according to Claim 1,
**characterised in that**
a separation joint (7) opens up between the front (9) and the rearwardly connecting roof area (8) during the storing of the roof and the other roof area (8), which is connected behind the rear edge (13) of the front roof area (9), is thereby able to be displaced under the front roof area (9).

3. The cabriolet vehicle (1) according to one of Claims 1 or 2,
**characterised in that**
the front roof area (9), in the stored state of the roof (3), is situated at least almost at the same height as the rearwardly bordering car body edge (15) which is connected further to the rear and another car body outer surface (14) which is rearwardly connected thereto.

4. The cabriolet vehicle (1) according to one of Claims 1 to 3,
**characterised in that**
the gap (23) which remains, in the stored state of the roof, between the rear edge (13) of the front roof area (9) and the car body edge (15) rearwardly bordering the recess is narrower than 40 millimetres.

5. The cabriolet vehicle (1) according to one of Claims 1 to 4,
**characterised in that**
viewed from above, the car body (4) edge (15) rearwardly bordering the car body recess (14) runs over its course such that it includes a respective component towards the vehicle transverse sides which points in the direction of travel (F), and the rear edge (13) of the front roof area (9) includes components towards the sides corresponding to the curvature of the car body edge (15) which point in the direction of travel (F).

6. The cabriolet vehicle (1) according to one of Claims 1 to 5,
**characterised in that**
the front roof area (9) is formed substantially as a structural unit which is inherently rigid.

7. The cabriolet vehicle (1) according to one of Claims 1 to 6,
**characterised in that**
the front roof area (9) includes a plate body (11) which can be fixed to the windscreen frame (2) at one end and can be connected to the other roof area (8) including the cover at the other end.

8. The cabriolet vehicle (1) according to Claim 7,
**characterised in that**
viewed from above, the plate body (11) includes a substantially convex form with a bossed front (12) and rear (13) edge.

9. The cabriolet vehicle (1) according to one of Claims 7 or 8,
**characterised in that**
the plate body (11) is formed as a single part.

10. The cabriolet vehicle (1) according to one of Claims 7 to 9,
**characterised in that**
the plate body (11) consists of a light construction material.

11. The cabriolet vehicle (1) according to one of Claims 1 to 10,
**characterised in that**
the front end (18) of the other roof area (8) connected to the front roof area (9) is formed in the manner of a conventional roof summit and can be locked together with the rear edge (13) of the front roof area (9).

12. The cabriolet vehicle (1) according to one of Claims 1 to 11,
**characterised in that**
the rearwardly bordering car body edge (15) connected to the car body recess (14) forms, at least in areas, the front edge (16) of a boot lid (17).

13. The cabriolet vehicle (1) according to one of Claims 1 to 11,
**characterised in that**
the rearwardly bordering car body edge (15) connected to the car body recess (14) forms, at least in areas, the front edge of a crossbar of the car body outer surface (24), which crossbar is arranged in front of the boot lid.

## Revendications

1. Cabriolet (1) avec un toit (3) pourvu au moins localement d'un recouvrement flexible (6), qui comprend une partie de toit avant (9) qui peut être rangée dans un logement (14) de la carrosserie, dans la même orientation qu'à l'état fermé, logement qui est limité à l'arrière par une arête (15) de la carrosserie (4), **caractérisé en ce que** la surface extérieure (10) de la partie de toit avant (9) est séparée de parties (8) situées plus vers l'arrière et pourvues du recouvrement (6) et l'arête arrière (13) de la partie de toit avant (9) est adaptée au tracé de l'arête (15) de la carrosserie (4) limitant à l'arrière le logement de carrosserie (14).

2. Cabriolet (1) selon la revendication 1, **caractérisé en ce qu'**un joint de séparation (7) entre la partie de toit avant (9) et la partie de toit s'y raccordant à l'arrière (8) s'ouvre pendant le dépôt du toit et l'autre partie de toit (8) se raccordant derrière l'arête arrière (13) de la partie de toit avant (9) peut en l'occurrence être déplacée en dessous de la partie de toit avant (9).

3. Cabriolet (1) selon l'une quelconque des revendications 1 ou 2, **caractérisé en ce qu'**à l'état rangé du toit (3), la partie de toit avant (9) se trouve au moins approximativement à la hauteur de l'arête (15) de la carrosserie de limitation arrière se raccordant plus loin à l'arrière et d'une autre surface extérieure de carrosserie (14) se raccordant à celle-ci vers l'arrière.

4. Cabriolet (1) selon l'une quelconque des revendications 1 à 3, **caractérisé en ce que** la fente (23) entre l'arête arrière (13) de la partie de toit avant (9) et l'arête de carrosserie (15) limitant le logement à l'arrière, qui subsiste à l'état rangé du toit, a une largeur inférieure à 40 mm.

5. Cabriolet (1) selon l'une quelconque des revendications 1 à 4, **caractérisé en ce que** l'arête (15) de la carrosserie (1) limitant à l'arrière le logement de carrosserie a, dans une vue en plan, un tracé tel qu'elle comprenne vers les côtés transversaux du véhicule une composante orientée dans la direction de déplacement (F) et que l'arête arrière (13) de la partie de toit avant (9) comprenne vers les côtés des composantes orientées dans la direction de déplacement (F) correspondant à la courbure de l'arête de carrosserie (15).

6. Cabriolet (1) selon l'une quelconque des revendications 1 à 5, **caractérisé en ce que** la partie de toit avant (9) est essentiellement une unité structurelle par nature rigide.

7. Cabriolet (1) selon l'une quelconque des revendications 1 à 6, **caractérisé en ce que** la partie de toit avant (9) comprend un corps de tôle (11) pouvant se fixer par une extrémité au cadre de pare-brise (2) et être assemblé par l'autre extrémité à l'autre partie de toit (8) comprenant le recouvrement.

8. Cabriolet (1) selon la revendication 7, **caractérisé en ce que** le corps de tôle (11) comprend une forme essentiellement convexe dans une vue en plan, avec une arête avant (12) et arrière (13) bombées.

9. Cabriolet (1) selon l'une quelconque des revendications 7 ou 8, **caractérisé en ce que** le corps de tôle (11) est d'une seule pièce.

10. Cabriolet (1) selon l'une quelconque des revendications 7 à 9, **caractérisé en ce que** le corps de tôle (11) est composé d'un matériau léger.

11. Cabriolet (1) selon l'une quelconque des revendications 1 à 10, **caractérisé en ce que** l'extrémité avant (18) de l'autre partie de toit (8) se raccordant à la partie de toit avant (9) est réalisée à la manière d'une pointe de toit conventionnelle et peut être verrouillée avec l'arête arrière (13) de la partie de toit avant (9).

12. Cabriolet (1) selon l'une quelconque des revendications 1 à 11, **caractérisé en ce que** l'arête de limitation arrière (15) de la carrosserie se raccordant au logement de carrosserie (14) est au moins localement l'arête avant (16) d'un capot de coffre à bagages (17).

13. Cabriolet (1) selon l'une quelconque des revendications 1 à 11, **caractérisé en ce que** l'arête de limitation arrière (15) de la carrosserie se raccordant au logement de carrosserie (14) est au moins localement l'arête avant d'un verrou transversal de la surface extérieure de carrosserie (24) disposé avant un capot de coffre à bagages.
